# DEMANDE DE BREVET EUROPEEN

(11) **EP 3 100 853 A1**
(43) Date de publication de la demande: **07.12.2016**
(21) Numéro de dépôt: 15170141.4
(22) Date de dépôt: 01.06.2015
(51) Int. Cl.: B32B 17/10

(54) **PROCÉDÉ POUR L'ALIMENTATION ÉLECTRIQUE D'UN COMPOSANT ÉLECTRONIQUE D'UN VITRAGE FEUILLETÉ, VITRAGE FEUILLETÉ POUR LA MISE EN OEUVRE DUDIT PROCÉDÉ**

(71) Demandeur: AGC Glass Europe, 1348 Louvain-la-Neuve (BE)
(72) Inventeur: VIVIER, Jonathan, 5030 Beuzet (BE)
(74) Mandataire: Chabou, Samia

(57) **Abrégé**

L'invention concerne un procédé pour l'alimentation électrique d'un composant électronique d'un vitrage feuilleté, ledit vitrage feuilleté comprenant au moins deux feuilles de verre superposées 2, 10 avec interposition d'au minimum un intercalaire thermoplastique 12 et le composant électronique 8 étant logé entre les deux feuilles de verre, procédé selon lequel on relie le composant électronique à une source de courant électrique 11 par l'intermédiaire d'un circuit électroconducteur 6a, 6b, qui est logé entre les feuilles de verre. Selon l'invention, la source de courant électrique 11 est contrôlée en durée d'activation par un microcontrôleur 13.

## Description

L'invention se rapporte aux vitrages feuilletés, spécialement aux vitrages feuilletés incorporant des composants électroniques.

L'invention concerne plus particulièrement un procédé pour l'alimentation électrique d'un composant électronique d'un tel vitrage feuilleté, ainsi qu'un vitrage feuilleté spécialement adapté à la mise en oeuvre de ce procédé.

Les vitrages feuilletés sont communément utilisés dans l'industrie automobile pour la fabrication des pare-brise des voitures automobiles et dans l'industrie du bâtiment pour la fabrication notamment de vitrages de sécurité, de verrières et de garde-fous de balcons ou de terrasses.

Les vitrages feuilletés sont des assemblages composites feuilletés. Ils comprennent normalement deux feuilles de verre superposées, entre lesquelles un intercalaire thermoplastique est interposé. L'intercalaire thermoplastique est un film adhésif dont la fonction est de solidariser les deux feuilles de verre. On utilise communément du polyvinylbutyral (PVB) ou un copolymère d'éthylène et d'acétate de vinyle (EVA), bien que d'autres matières adhésives puissent convenir.

Dans le document WO 2004/062908 (GLAVERBEL), on décrit des vitrages feuilletés dans lesquels on a incorporés des composants électroniques, ainsi qu'un circuit électroconducteur pour la connexion desdits composants électroniques à une source de courant électrique.

Les composants électroniques (par exemple des diodes électroluminescentes) et le circuit électroconducteur sont logés entre les feuilles de verre ou entre une desdites feuilles et l'intercalaire thermoplastique.

On a observé que, dans certaines conditions d'utilisation, ces vitrages connus subissent un vieillissement caractérisé par une corrosion progressive du circuit électroconducteur. Cette corrosion impacte l'esthétique en formant une couleur brunâtre, mais également les propriétés électriques du circuit électroconducteur. Ainsi, lorsque ces vitrages sont alimentés, ils peuvent atteindre une température de 85°C, cette corrosion peut alors apparaitre précocement et après seulement 3 jours.

On a maintenant trouvé que l'on peut ralentir considérablement, voire annihiler, la corrosion des vitrages connus précités, au moyen d'une sélection appropriée de l'alimentation électrique de leurs composants électroniques.

En conséquence, l'invention vise à fournir un procédé nouveau et original pour l'alimentation électrique des composants électroniques des vitrages connus décrits plus haut, ce procédé évitant une corrosion du circuit électroconducteur du vitrage, au cours de son utilisation.

L'invention a dès lors aussi pour objectif de fournir un procédé pour l'alimentation électrique des composants électroniques des vitrages feuilletés, qui ralentit, voire annihile, le vieillissement de ces vitrages.

Un autre objectif de l'invention est de fournir un vitrage nouveau, qui est spécialement adapté à la mise en oeuvre du procédé susdit.

Un objectif supplémentaire de l'invention est de fournir une installation comprenant, d'une part, un vitrage feuilleté incorporant un composant électronique et, d'autre part, une source de courant électrique reliée audit composant électronique, ladite installation étant conçue pour ralentir, voire annihiler, le vieillissement défini plus haut du vitrage.

En conséquence, l'invention a pour objet un procédé pour l'alimentation électrique d'un composant électronique d'un vitrage feuilleté, ledit vitrage feuilleté comprenant au moins deux feuilles de verre superposées avec interposition d'au minimum un intercalaire thermoplastique et le composant électronique étant logé entre les deux feuilles de verre, procédé selon lequel on relie le composant électronique à une source de courant électrique par l'intermédiaire d'un circuit électroconducteur, qui est logé entre les feuilles de verre ; selon l'invention, le procédé se caractérise en ce que la source de courant électrique est contrôlé en durée par un microcontrôleur.

Les vitrages feuilletés mis en oeuvre dans le procédé selon l'invention sont du type de ceux communément utilisés en technique, définis plus haut. Ils comprennent, d'une manière générale au moins une paire de feuilles de verre entre lesquelles un intercalaire en matière thermoplastique est pris en sandwich. Les dimensions et la forme du vitrage ne sont pas critiques pour la définition de l'invention. Le vitrage peut être indifféremment plan ou incurvé ou avoir toute forme compatible avec sa destination.

Suivant les applications recherchées, on peut indifféremment mettre en oeuvre des feuilles de verre clair, coloré, mat, sablé, sérigraphié ou tout autre type de verre approprié.

L'intercalaire thermoplastique a pour fonction de solidariser les deux feuilles de verre. Il comprend généralement un film en polyester, celui-ci pouvant avantageusement être sélectionné parmi le polyvinylbutyral (PVB), les copolymères d'éthylène et d'acétate de vinyle (EVA) et le polyéthylènetéréphtalate (PET). L'intercalaire peut comprendre un film unique en polyester. En variante, l'intercalaire peut comprendre un empilage de plusieurs films en polyester du type décrit ci-dessus. L'épaisseur de l'intercalaire thermoplastique n'est pas critique pour la définition de l'invention. L'épaisseur optimum doit être déterminée dans chaque cas particulier par l'homme du métier en fonction de divers paramètres, notamment les dimensions du vitrage, la destination de celui-ci et de la composition dudit intercalaire. L'épaisseur de l'intercalaire thermoplastique est généralement inférieure à 3,5 mm, cette dimension étant toutefois donnée à titre purement exemplatif et non limitatif quant à la portée de l'invention.

En variante, le vitrage peut comprendre plus de deux feuilles de verre superposées, alternant avec des intercalaires thermoplastiques.

Le composant électronique a pour fonction de conférer au vitrage une ou plusieurs fonctionnalités particulières. Il doit normalement avoir des dimensions qui permettent de l'insérer entre les feuilles de verre, sans nuire aux propriétés du vitrage. La sélection la plus appropriée des dimensions du composant électronique doit être déterminée dans chaque cas particulier par l'homme du métier, en fonction de divers paramètres, notamment la forme, les dimensions et la constitution du vitrage, ainsi que sa destination. En pratique, le composant électronique a généralement une très faible épaisseur, habituellement inférieure à 3 mm, par exemple comprise entre 0,1 et 1,2 mm. Ces dimensions du composant électronique sont toutefois données à titre purement exemplatif et ne sont pas limitatives quant à la portée de l'invention.

La sélection du composant électronique va dépendre de la fonctionnalité recherchée. Les composants optoélectroniques tels que notamment les diodes électroluminescentes (LED), les photorésistances, les photodiodes et les capteurs de vision, par exemple du type CCD (abréviation bien connue en technique de l'expression anglo-saxonne "Charge Coupled Device") et CMOS (abréviation bien connue en technique de l'expression anglo-saxonne "Complementary Metal Oxide Semiconductor") sont particulièrement utiles car directement en rapport avec l'aspect optique du vitrage. Cependant, d'autres composants électroniques peuvent aussi être insérés afin de réaliser des circuits électroniques complets. Suivant le type de composants et les conducteurs électriques utilisés, ces circuits peuvent être visibles ou non.

Le vitrage mis en oeuvre dans l'invention peut comprendre un seul composant électronique. Il peut toutefois aussi comprendre plusieurs composants électroniques, ce qui est le cas le plus fréquent.

Lorsque le vitrage contient plusieurs composants électroniques, ceux-ci peuvent être tous identiques. En variante, le vitrage peut comprendre une pluralité de composants électroniques différents, exerçant des fonctionnalités différentes.

Dans la suite du présent mémoire, le vocable "composant électronique" désigne un composant électronique individuel ou, globalement, un ensemble de plusieurs composants électroniques.

De façon générale, l'invention concerne tous types de composants électroniques insérés dans les verres feuilletés, notamment les circuits de mise en forme et d'amplification des signaux issus des antennes électromagnétiques intégrées dans ces mêmes vitrages ainsi que les circuits de contrôle des éclairages et des capteurs ci-dessus détaillés.

Le composant électronique du vitrage doit pouvoir être alimenté en courant électrique, pour exercer sa fonctionnalité. A cet effet, le vitrage comprend, de manière connue en soi, un circuit électroconducteur, logé entre les deux feuilles de verre ou entre une feuille de verre et l'intercalaire thermoplastique. A cet effet, le circuit électroconducteur peut comprendre des fils, des bandes ou une ou plusieurs couches d'une matière électro conductrice, reliant le composant électronique à la source de courant électrique. Il doit normalement avoir des dimensions qui permettent de l'insérer entre les feuilles de verre, sans nuire aux propriétés du vitrage. Des couches conductrices typiques ont une épaisseur généralement comprise entre 0,02 et 1 *µ*m, de préférence entre 0,02 et 0,5 *µ*m, de manière encore préférée entre 0,2 et 0,4 *µ*m et une résistance de surface située entre 0 et 80 Ω/carré, de manière préférée entre 4 et 50 Ω/carré, de manière encore préférée entre 4 et 20 Ω/carré. En fonction des applications recherchées, le circuit électroconducteur peut ou doit être visible, invisible, transparent, translucide ou opaque.

Dans une premier mode de réalisation de l'invention, le circuit électroconducteur comprend un réseau de fils conducteurs laminés dans la matière thermoplastique de l'intercalaire ou déposés par sérigraphie sur la face intérieure d'une feuille de verre laminé.

Dans un deuxième mode de réalisation de l'invention, le circuit électroconducteur comprend une couche électro conductrice transparente, recouvrant une feuille de verre à l'interface de celle-ci avec l'intercalaire thermoplastique. Dans cette variante de l'invention, des pistes ou bandes électro conductrices peuvent avoir été découpées dans cette couche conductrice par l'action d'un rayon laser qui brûle la couche sur une faible largeur, réalisant ainsi des sillons non conducteurs qui délimitent les pistes dans le reste de la couche. Les sillons non conducteurs ont généralement une largeur comprise entre 0,01 et 3 mm, de préférence comprise entre 0,05 et 1,5 mm, et de manière encore préférée entre 0,1 et 0,8 mm. De cette manière, on peut obtenir des connexions électriques quasiment invisibles même si la couche conductrice présente une légère coloration.

Dans ce deuxième mode de réalisation de l'invention, le circuit électroconducteur comprend une couche électro conductrice que l'on a déposée sur une des feuilles de verre. Deux processus opératoires industriels distincts peuvent être mis en oeuvre pour réaliser le dépôt de cette couche électro conductrice.

Dans un premier processus opératoire, la couche électro conductrice comprend une couche pyrolytique, déposée sur la surface du verre à des températures allant de 500 à 750 °C. De préférence, la couche pyrolytique conductrice est déposée à des températures de 570 à 660 °C. Une couche de ce type peut être déposée directement sur le ruban de verre chaud, à la sortie de l'étape dans laquelle le verre fondu flotte à la surface d'un bain d'étain métallique liquide, dans le procédé de fabrication bien connu du verre flotté ("float glass"). Le dépôt peut être fait par pulvérisation (spray) de fines gouttes de liquide ou par dépôt chimique en phase vapeur. Avantageusement, la couche pyrolytique est une couche déposée chimiquement en phase vapeur. La couche pyrolytique est constituée d'au moins un oxyde électroconducteur. Généralement, la conductibilité électrique est réalisée par la présence d'une faible proportion d'éléments dopants dans la couche d'oxyde(s). De telles couches pyrolytiques comprennent par exemple de l'oxyde de zinc dopé à l'indium ou à l'aluminium, de l'oxyde d'étain dopé au fluor ou à l'antimoine ou de l'oxyde d'indium dopé à l'étain (ce dernier étant généralement connu sous l'abréviation ITO). Le processus opératoire pyrolytique convient bien pour former une couche de dioxyde d'étain dopé avec du fluor et/ou de l'antimoine.

Dans un deuxième processus opératoire, la couche électro conductrice est obtenue par pulvérisation cathodique magnétron sous vide (connu sous la terminologie "magnetron sputtering" dans la littérature anglo-saxonne). Cette couche électro conductrice peut par exemple être une couche tendre constituée d'un empilage des couches élémentaires suivantes :

TiO₂ / ZnO / Ag / Ti / ZnO / SnO₂

La résistance de surface de ces couches tendres est généralement de 1 à 20 Ω/carré et, de préférence de 1 à 10 Ω/carré. Une valeur de résistance de surface de 5 Ω/carré a donné d'excellents résultats.

La couche conductrice magnétron peut aussi être constituée d'un empilage qui comprend une couche électro conductrice Zn dopé Al ou encore une couche In dopé Sn (couche "ITO"). La résistance de surface de ces couches est d'environ 4 à 50 Ω/carré et, de préférence d'environ 4 à 15 Ω/carré.

On préfère généralement les couches pyrolytiques aux couches magnétron, en raison de leur résistance mécanique à la rayure plus élevée.

Des informations complémentaires concernant le vitrage feuilleté mis en oeuvre dans le procédé selon l'invention sont accessibles dans le document WO 2004/062908 (GLAVERBEL).

Selon l'invention, l'alimentation électrique du composant électronique est opérée au moyen d'une source de courant électrique pilotée par un microcontrôleur

Les caractéristiques électriques de la source de courant vont dépendre du composant électronique et doivent être déterminées par l'homme du métier dans chaque cas particulier. En général, dans le cas de diodes électroluminescentes (LED), on recommande d'utiliser une source de courant dont la tension de crête se situe entre 1 et 5 V, idéalement entre 2 et 4 V.

La source de courant électrique permet d'alimenter le composant électronique en tension direct lorsque celui-ci est allumé, et en tension inverse lorsque le composant électronique est éteint.

Le microcontrôleur associé à cette source de courant électrique permet de mesurer combien de temps le composant électronique est resté allumé. A l'extinction du composant électronique, le microcontrôleur active la source de courant en polarisation inverse durant le même temps que celui de la polarisation positive.

A la température de 85°C, température atteinte par exemple lorsque un certain type de composant électronique est activé, pour éviter l'altération irréversible du vitrage, il est recommandé de limiter le temps d'activation en polarisation positive à 36h, et de préférence à 12h. Pour l'utilisation de vitrages à des températures plus faibles que 85°C, le temps d'activation en polarisation positive pourra augmenter considérablement. Le temps d'activation pourra bien entendu être adapté au type de composant électronique et à la température maximale souhaitée.

Le procédé selon l'invention s'applique avec avantage aux vitrages dans lesquels le circuit électroconducteur contient un oxyde métallique (spécialement du dioxyde d'étain) et où l'intercalaire thermoplastique contient des ions métalliques, spécialement des ions de métaux alcalins et/ou de métaux alcalino-terreux. En alimentant un tel vitrage avec une source de courant continu, on observe une corrosion progressive du circuit électroconducteur, à proximité des composants électroniques, cette corrosion se manifestant par une coloration brunâtre dudit circuit électroconducteur. Cette corrosion est d'autant plus rapide que la température du vitrage est élevéeCette corrosion n'a pas été observée dans le cas où la source de courant est, conformément à l'invention, une source de courant électrique pilotée par un microcontrôleur.

Le procédé selon l'invention s'applique dès lors tout particulièrement aux vitrages feuilletés dans lesquels le circuit électroconducteur contient du dioxyde d'étain et l'intercalaire thermoplastique contient des ions d'au moins un métal sélectionné parmi le sodium, le potassium, le lithium, le calcium et le magnésium. Dans cette forme de réalisation de l'invention, on peut mettre en oeuvre du dioxyde d'étain qui a été dopé avec du fluor et/ou de l'antimoine, pour le rendre conducteur de l'électricité ou un mélange électroconducteur de dioxyde d'étain et d'indium.

En variante, on peut aussi mettre en oeuvre pour le circuit électroconducteur, un empilage de couches dont l'une au moins est conductrice de l'électricité. Dans cette variante de l'invention, l'empilage de couches peut par exemple comprendre une couche d'un métal bon conducteur de l'électricité (avantageusement l'argent). Un empilage de couches TiO₂ / ZnO / Ag / Ti / ZnO / SnO₂ convient bien.

L'invention concerne aussi un vitrage comprenant, d'une part, deux feuilles de verre superposées avec interposition d'un intercalaire thermoplastique et, d'autre part, au moins deux diodes qui sont logées entre les feuilles de verre et qui sont connectées à un circuit électroconducteur, également logé entre les deux feuilles de verre, le vitrage se caractérisant en ce que les deux diodes sont connectées en parallèle, en position tête-bêche, au circuit électroconducteur. Dans le vitrage selon l'invention, l'expression "en position tête-bêche" signifie que la connexion des deux diodes aux bornes de la source de courant est agencée de telle sorte qu'une même borne de la source de courant est connectée à l'anode d'une des diode et à la cathode de l'autre diode. Cette connexion électrique a pour résultat que les deux diodes laisse passer du courant alternativement.

Dans le vitrage selon l'invention, le composant électronique est avantageusement choisie de sorte que celui-ci intègre ces 2 diodes, la première est la diode lumineuse et la seconde est la diode de protection.

Le procédé et le vitrage selon l'invention trouvent diverses applications industrielles, notamment dans l'industrie du bâtiment à usage privé ou à usage professionnel, dans l'industrie automobile, dans l'industrie navale, dans l'industrie ferroviaire et dans l'industrie aéronautique (liste exemplative, non exhaustive).

Le procédé et le vitrage selon l'invention s'appliquent indifféremment à des vitrages utilisés comme cloisons internes ou externes de bâtiment publics ou privés ou de véhicules, ou aussi à des vitrages décoratifs disposés à l'intérieur ou à l'extérieur de bâtiments ou de véhicules.

L'invention concerne dès lors aussi une installation comprenant un vitrage feuilleté incorporant un composant électronique relié à une source de courant électrique, ledit vitrage feuilleté comprenant deux feuilles de verre superposées avec interposition d'un intercalaire thermoplastique et le composant électronique étant logé entre les deux feuilles de verre et étant relié à la source de courant électrique par l'intermédiaire d'un circuit électroconducteur, qui est logé entre les deux feuilles de verre ; selon l'invention, l'installation se caractérise par la source de courant électrique pilotée par un microcontrôleur.

L'installation selon l'invention comprend par exemple un bâtiment public ou privé dont le vitrage équipe une fenêtre ou sert de cloison interne ou est utilisé en tant que cloison décorative. L'installation selon l'invention peut aussi comprendre un véhicule automobile terrestre, naval ou aérien dans le quel le vitrage constitue une fenêtre ou un hublot donnant sur l'extérieur ou une cloison interne, éventuellement décorative.

Le vitrage feuilleté de l'installation selon l'invention, est généralement du type de ceux décrits dans le document WO 2004/062908 (GLAVERBEL).

Dans une forme de réalisation particulière de l'installation selon l'invention, le vitrage feuilleté de celle-ci est un vitrage conforme à l'invention, défini plus haut.

L'installation selon l'invention peut comprendre un vitrage unique. En variante, l'installation selon l'invention peut comprendre plusieurs vitrages feuilletés identiques ou différents, incorporant des composants électroniques. Dans le cas où l'installation selon l'invention comprend plusieurs vitrages feuilletés incorporant chacun des composants électroniques, l'installation peut comprendre une seule source de courant électrique raccordée à l'ensemble des vitrages ou plusieurs sources de courant électrique qui sont raccordées chacune à un vitrage distinct.

Des particularités et détails de l'invention vont apparaître au cours de la description suivante des figures annexées, qui représentent quelques formes de réalisation particulières de l'invention.
La figure 1 montre schématiquement une forme de réalisation particulière de l'installation selon l'invention ;
La figure 2 est un schéma d'un détail d'un vitrage conforme à l'invention ;
La figure 3 montre un détail d'un autre vitrage conforme à l'invention.

Dans ces figures des mêmes numéros de référence désignent les mêmes éléments.

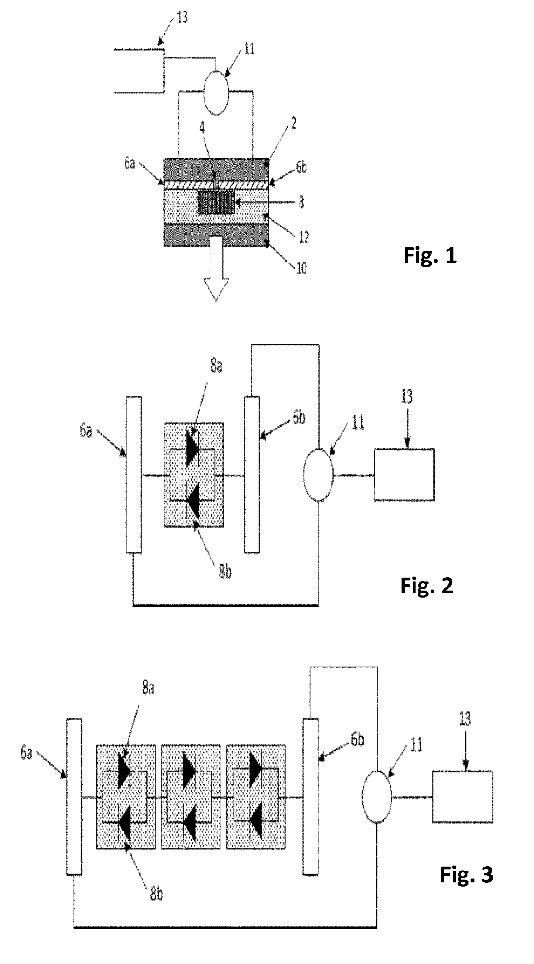

L'installation schématisée à la figure 1 comprend un vitrage feuilleté qui a été réalisé comme suit. Une couche électro conductrice 6 (conductivité d'environ 2 Ω/carré) a été déposée sur une feuille 2 de verre sodocalcique clair de 2,1 mm d'épaisseur, destinée à être la feuille de verre extérieure du vitrage. La couche conductrice 6 est éliminée au laser sur de fines bandes ou sillons 4 d'environ 0,15 mm de large, de manière à délimiter des pistes conductrices 6a, 6b. Le composant électronique, qui dans ce cas-ci est une LED, est collé de part et d'autre d'une fine bande 4 avec une colle conductrice, de telle sorte que ses électrodes soient en contact électrique avec les bandes électro conductrices 6a et 6b. Des colles conductrices typiques sont par exemple des colles à l'argent.

La feuille de verre 2 est alors laminée, face revêtue vers l'intérieur, avec une deuxième feuille 10 de verre sodocalcique clair de manière traditionnelle, en intercalant une feuille thermoplastique double 12.

La colle utilisée pour fixer les LED 8 aux bandes 6a et 6b doit être choisie pour sa résistance aux hautes températures et pression nécessaires pour réaliser le vitrage feuilleté. Elle doit aussi être choisie en fonction de sa viscosité de manière à éviter qu'elle ne se répande dans la bande isolante 4 lors du laminage du feuilleté.

Les bandes électro conductrices 6a et 6b sont raccordées à une source de courant électrique 11 qui, conformément à l'invention, est pilotée par un microcontrôleur 13.

Le flux lumineux émis par les LED 8 est indiqué par la flèche. Il est orienté vers la feuille de verre intérieure 10 du vitrage.

Dans le vitrage de la figure 2, le vitrage comprend une LED constituée de 2 diodes 8a et 8b qui sont raccordées en parallèle aux deux bandes électro conductrices 6a et 6b. Conformément à l'invention, les deux diodes 8a et 8b sont disposées tête bêche à l'intérieur de la LED 8, de telle sorte que l'anode de la diode 8a et la cathode de la diode 8b soient raccordées à la bande électro conductrice 6a, tandis que l'anode de la diode 8b et la cathode de la diode 8a sont raccordées à la bande électro conductrice 6b.

Lorsque les bandes 6a et 6b sont raccordées à une source de courant électrique, les diodes 8a et 8b laisse passer le courant alternativement, en phase la source de courant électrique.

Dans le vitrage de la figure 3 le vitrage comprend 3 LED disposées en série. Conformément à l'invention, chaque LED dispose de diodes 8a et 8b disposées en tête-bêche. Lorsque les bandes 6a et 6b sont raccordées à une source de courant électrique, les diodes 8a et les diodes 8b laissent passer alternativement le courant en phase avec la source de courant électrique.

Les deux exemples qui suivent montrent le progrès réalisé par l'invention.

Dans chacun des deux exemples, on a mis en oeuvre un vitrage feuilleté que l'on a obtenu en opérant comme suit :
- Sur une feuille de verre de 2,1 mm d'épaisseur, on a déposé une couche électro conductrice à base d'oxyde d'étain dopé au fluor, de 300 nm d'épaisseur et d'environ 2 Ω/carré ;
- Au moyen d'un rayon laser, on a délimité dans la couche électro conductrice, deux zones électro conductrices distinctes, séparées par un sillon non-conducteur ;
- De part et d'autre du sillon non conducteur, on a collé un nombre suffisant de diodes électroluminescentes (LED) pour obtenir l'effet lumineux recherché, l'anode de chaque LED étant en contact avec une des deux zones conductrices susdites et la cathode de chaque LED étant en contact avec l'autre zone conductrice ;
- Sur l'assemblage ainsi obtenu, on a posé trois feuilles de PVB clair totalisant une épaisseur de 1,14 mm, puis une feuille de verre clair de 2,1 mm d'épaisseur.

L'ensemble ainsi réalisé a été passé à l'autoclave pendant un cycle de 120 minutes comportant au minimum 35 minutes à température et pression élevées (125°C et 8 bars).

Dans ce mode de réalisation, les LED sont disposées en série. Ce mode de réalisation a l'avantage de fournir un seul circuit de connexion totalement invisible même en utilisant deux feuilles de verre clair.

### Exemple 1 (non conforme à l'invention) :

Dans cet exemple, les deux zones électro conductrices précitées ont été raccordées respectivement aux deux bornes d'une source de courant continu, de telle sorte que les anodes des LED soient reliées à la borne positive de la source de courant, les cathodes étant reliées à la borne négative de ladite source de courant.

On a soumis le vitrage à un test de vieillissement dans les conditions suivantes :
- courant électrique dans les LED : 25 mA ;
- température ambiante : 85 °C ;
- durée du test : 72 heures.

A l'issue du test, on a observé une coloration brune dans la zone conductrice du vitrage, raccordée à la borne négative de la source de courant continu. Cette coloration se présentait sous la forme d'une ligne brunâtre le long du sillon non-conducteur, à proximité des LED et sous la forme d'un demi-anneau brunâtre à quelques millimètres des LED.

### Exemple 2 (conforme à l'invention (conforme à l'invention) :

On a répété l'essai de l'exemple 1, en utilisant une source de courant électrique pilotée par un microcontrôleur.

A l'issue du test de vieillissement, on n'a pas relevé de coloration brune dans le vitrage.

## Revendications

1. Procédé pour l'alimentation électrique d'un composant électronique d'un vitrage feuilleté, ledit vitrage feuilleté comprenant au moins deux feuilles de verre superposées (2, 10) avec interposition d'au minimum un intercalaire thermoplastique (12) et le composant électronique (8) étant logé entre les deux feuilles de verre, procédé selon lequel on relie le composant électronique à une source de courant électrique (11) par l'intermédiaire d'un circuit électroconducteur (6a, 6b), qui est logé entre les feuilles de verre, **caractérisé en ce que** la source de courant électrique (11) est contrôlée en durée d'activation par un microcontrôleur (13) .

2. Procédé selon la revendication 1, **caractérisé en ce que** le circuit électroconducteur (6a, 6b) contient au moins un oxyde métallique et l'intercalaire thermoplastique (12) contient des ions métalliques.

3. Procédé selon la revendication 2, **caractérisé en ce que** les ions métalliques de l'intercalaire thermoplastique (12) comprennent des ions de métaux alcalins et/ou alcalino-terreux.

4. Procédé selon la revendication 3, **caractérisé en ce que** les ions métalliques de l'intercalaire thermoplastique (12) comprennent des ions de sodium et/ou de potassium et/ou de lithium et/ou de magnésium et/ou de calcium.

5. Procédé selon l'une quelconque des revendications 2 à 4, **caractérisé en ce que** l'oxyde métallique du circuit électroconducteur (6a, 6b) comprend du dioxyde d'étain.

6. Procédé selon la revendication 5, **caractérisé en ce que** le dioxyde d'étain est rendu électroconducteur par dopage avec du fluor et/ou de l'antimoine.

7. Procédé selon la revendication 5, **caractérisé en ce que** le circuit électroconducteur (6a, 6b) comprend un mélange électroconducteur d'oxydes d'étain et d'indium.

8. Procédé selon l'une quelconque des revendications 5 à 7, **caractérisé en ce que** le circuit électroconducteur (6a, 6b) comprend un empilage de couches dont l'une au moins est électro conductrice.

9. Procédé selon la revendication 8, **caractérisé en ce que** la couche électro conductrice du circuit électroconducteur (6a, 6b) est une couche de métal électroconducteur.

10. Procédé selon la revendication 9, **caractérisé en ce que** le circuit électroconducteur (6a, 6b) comprend un empilage de couches TiO₂ / ZnO / Ag / Ti / ZnO / SnO₂.

11. Procédé selon l'une quelconque des revendications 1 à 10, **caractérisé en ce que** l'intercalaire thermoplastique (12) comprend un film en polyester.

12. Procédé selon la revendication 11, **caractérisé en ce que** le polyester de l'intercalaire thermoplastique (12) est sélectionné parmi le polyvinylbutyral, les copolymères d'éthylène et d'acétate de vinyle et le polyéthylènetéréphtalate.

13. Procédé selon l'une quelconque des revendications 1 à 12, **caractérisé en ce que** la source de courant électrique (11) présente une durée maximum d'activation en tension positive de 32h et en tension négative de 32h.

14. Procédé selon la revendication 13, **caractérisé en ce que** la source de courant électrique (11) présente une durée maximum d'activation en tension positive de 12h et en tension négative de 12h.

15. Procédé selon l'une quelconque des revendications 1 à 14, **caractérisé en ce que** la source de courant électrique (11) est du type à ondes carrées.

16. Procédé selon l'une quelconque des revendications 1 à 15, **caractérisé en ce que** le composant électronique (8) comprend un composant optoélectronique.

17. Procédé selon la revendication 16, **caractérisé en ce qu'**on sélectionne le composant optoélectronique parmi diodes électroluminescentes, les photorésistances, les photodiodes et les capteurs de vision.

18. Procédé selon l'une quelconque des revendications 1 à 17, **caractérisé en ce que** le circuit électroconducteur (6a, 6b) est obtenu en interposant, entre l'intercalaire thermoplastique (12) et une des feuilles de verre (2, 10), un film électroconducteur que l'on segmente par des bandes (4) non conductrices de l'électricité.

19. Vitrage feuilleté pour la mise en oeuvre du procédé selon l'une quelconque des revendications 1 à 18, comprenant, d'une part, deux feuilles de verre superposées (2, 10) avec interposition d'un intercalaire thermoplastique (12) et, d'autre part, un composant électronique composé d'une diode électroluminescente (8a) et d'une diode de protection (8b) qui sont logées entre les feuilles de verre et qui sont connectées à un circuit électroconducteur (6a, 6b), également logé entre les deux feuilles de verre, **caractérisé en ce que** les deux diodes (8a, 8b) sont connectées en parallèle, en position tête-bêche, au circuit électroconducteur (6a, 6b).
